# EUROPEAN PATENT APPLICATION

(11) **EP 3 670 627 A1**
(43) Date of publication of application: **24.06.2020**
(21) Application number: 18213506.1
(22) Date of filing: 18.12.2018
(51) Int. Cl.: C09J 175/16, C08G 18/67, C08G 18/73, C08G 18/80, C08G 18/81, C08F 290/14, C08G 18/08, C08G 18/22, C08G 18/28, C09D 175/14, C09D 175/16, C08G 18/32, C09J 175/14

(54) **METHOD FOR THE PRODUCTION OF THIOETHER-CONTAINING POLYURETHANES**

(71) Applicant: Henkel AG & Co. KGaA, 40589 Düsseldorf (DE)
(72) Inventor: Ito, Kenji, 40597 Düsseldorf (DE); Taden, Andreas, 40597 Düsseldorf (DE)

(57) **Abstract**

The present invention refers to a method for the production of thioether-containing polyurethanes wherein the thioether-containing polyurethane is obtained from a reaction mixture comprising at least on vinylether-functionalized polyurethane and at least one thiol compound. The present invention further relates to the use of a thioether-containing polyurethane in adhesive compositions or coating compositions.

## Description

The present invention refers to a method for the production of thioether-containing polyurethanes wherein the thioether-containing polyurethane is obtained from a reaction mixture comprising at least on vinylether-functionalized polyurethane and at least one thiol compound. The present invention further relates to the use of a thioether-containing polyurethane in adhesive compositions or coating compositions.

Owing to a wide variety of available polyols and isocyanates, polyurethanes rank among the most versatile and diversified polymers. Since their first discovery in 1937, there has been a tremendous progress in polyurethane chemistry. Today's polyurethanes have a wide range of applications, from rigid foams for thermal insulation to flexible foams for furniture, from coatings to paints, from automotive industry to adhesives, from packaging to composite.

In order to further broaden the scope of applications for polyurethanes, thioether-containing polyurethanes have become the focus of attention as attractive materials as hybrid materials in connection with biomaterials such as peptides and proteins.

One approach to thioether-containing polyurethanes has been to use thiol-ene reactive polyurethanes, in particular with regard to a starting material which allows crosslinking and post-modification under mild conditions.

EP 2 995 609 refers to method for preparing an alkenyl ether polyol containing at least on alkenyl ether group, in particular a 1-alkenyl ether group, and at least two hydroxyl groups (-OH) by A) reacting an alkenyl ether, containing at least one alkenyl ether group and at least one functional group selected from -OH, -COOH,- SH, -NH₂ and derivatives thereof, with (i) an epoxide or (ii) a cyclic carbonate or derivative thereof; or B) reacting an alkenyl ether, containing at least one alkenyl ether group and at least one functional group selected from (i) epoxide groups or (ii) cyclic carbonate groups or derivatives thereof, with an alcohol, thiol, a carboxylic acid or an amine or a derivative thereof.

WO 2016/126703 discloses a method of manufacturing a polyurethane polymer composition, comprising the steps of mixing a polyol monomer with a diisocyanate monomer, initiating polymerization of the polyol and diisocyanate monomers to form a thermoplastic polymer, blending the polymer with polythiol crosslinking agent and initiator dopant, initiating crosslinking of the polymer with at least one of light and heat to form a crosslinked polymer and curing the crosslinked polymer to for a thermoset polymer. However, curing of the thiol-ene reaction employed requires long duration under harsh conditions due to the low reactivity of allyl ether with thiols. This makes the disclosed reactive polyurethane unsuitable for environmentally benign adhesives and/or coating and fabrication of hybrid materials using thermally sensitive materials.

US 2007/0021521 and EP 1477511 disclose thiol-ene reactive polyurethanes prepared by endcapping with (meth)acryl and norbonenyl endcap reagents, respectively, for adhesive and/or coating applications. However, these polyurethanes are reactive only at the terminal ends. Therefore, these polyurethanes have inherent limitation to control crosslinking and modification due to lack of reactive functionalities in the polymer backbone.

In light of the drawbacks there still exists the need for a mild and easy method for the production of thioether-containing polyurethanes. The object of the present invention can therefore be seen in the provision of a method for the production of thioether-containing polyurethanes which can be obtained under mild conditions.

It was surprisingly found that this object is solved by a method of the production of thioether-containing polyurethanes by providing a reaction mixture comprising at least one vinylether-functionalized polyurethane and at least one thiol compound.

A first object of the present invention is therefore a method for the production of thioether-containing polyurethanes comprising the steps of providing a reaction mixture (B) comprising at least one vinylether-functionalized polyurethane and at least one thiol compound, characterized in that the at least one vinylether-functionalized polyurethane is obtained from a reaction mixture (A) comprising the at least one non-reactive polyol, at least one NCO-terminated compound and a vinyletherpolyol with at least one tertiary amine group.

The inventive method allows for polyurethanes containing a controlled amount of thioether groups. It was surprisingly found that the vinylether-functionalized polyurethane undergoes smooth thiol-ene reaction under mild conditions. Due to the insensitivity of the reaction to water, the inventive method may be carried out not only in organic solvents but also in an aqueous dispersion, allowing the production of polyurethane based hybrid materials using thermally sensitive biomaterials such as peptides and proteins.

In the course of the present invention, it was surprisingly found that the vinyletherpolyol with at least one tertiary amine group accelerated polyaddition to afford vinylether-functionalized polyurethanes. Without being bound by theory, it is believed that the vinyletherpolyol with at least one tertiary amine group not only acts as a reagent to incorporate a highly-reactive double bond for consecutive thiol-ene reactions, it also serves as a catalyst, promoting the reaction and providing the vinylether-functionalized polyurethane in high yields. Due to the surprising catalytic activity of the vinyletherpolyol with at least one tertiary amine group, there is no need for additional catalysts, allowing to reduce toxic waste and energy consumption for sustainable production. It was surprisingly found that the best results with regard to the vinylether-functionalized polyurethane could be obtained employing a reaction mixture (A) wherein the vinyletherpolyol with at least one tertiary amine groups is contained in an amount of no more than 30 wt.-%. In a preferred embodiment, the reaction mixture (A) from which the at least one vinylether-functionalized polyurethane is obtained comprises the vinyletherpolyol with at least one tertiary amine group in an amount of 0.1 to 30 t.-%, preferably 1 to 10 wt.-%, based on the total weight of the solvent-free reaction mixture (A).

Preferably, the vinylether-functionalized polyurethane is obtained by polyaddition from a reaction mixture (A) comprising at least one non-reactive polyol, at least one NCO-terminated compound and a vinyletherpolyol with at least one tertiary amine group. The polyaddition is preferably carried out at a temperature of 0 to 120°C, preferably 30 to 100°C.

The reaction mixture (A) further comprises at least one non-reactive polyol, preferably in an amount of 30 to 80 wt.-%, preferably 50 to 70 wt.-%, based on the total weight of the solvent-free reaction mixture (A). Usually, there are no special requirements with regard to the non-reactive polyol and it may be chosen according to requirements and demand. However, in a preferred embodiment, the non-reactive polyol preferably has an average hydroxyl value from 10 to 60 mg KOH/g, preferably 16 to 50 mg KOH/g. The hydroxyl value is defined as the number of milligrams of potassium hydroxide required to neutralize the acetic acid taken up on acetylation of one gram of a chemical substance that contains free hydroxyl groups. The analytical method used to determine hydroxyl value may involve acetylation of the free hydroxyl groups of the substance with acetic anhydride in pyridine solvent. After completion of the reaction, water is added, and the remaining unreacted acetic anhydride is converted to acetic acid and measured by titration with potassium hydroxide.

The reaction mixture (A) further comprises at least one NCO-terminated compound, preferably in an amount of 5 to 30 wt.-%, preferably 10 to 25 wt.-%, based on the total weight of the solvent-free reaction mixture (A). Any suitable NCO-terminated compound may be used. Preferably the NCO-terminated compound is a diisocyanate. In a preferred embodiment, the NCO-terminated compound is selected from the groups consisting of 1,5-naphthylene diisocyanate (NDI), 2,4'- or 4,4'-diphenylmethane diisocyanate (MDI), isomeres of toluylene diisocyanates (TDI), methylene triphenyl triisocyanate (MIT), hydrated MDI (H12MDI), tetramethylxylylene diisocyanate (TMXDI), 1-Isocyanatomethyl-3-isocyanato-1,5,5-trimethylcyclohexane (IPDI), xylylene diisocyanate (XDI), Hexan-1,6-diisocyanate (HDI), pentamethylene diisocyanate, dicyclohexylmethane diisocyanate as well as dimers, trimers, oligomers and polymers of the same.

Suitable (poly)isocyanate prepolymers are reactions products of compounds comprising OH groups and /or NH groups with an excess of polyisocyanates. Suitable prepolymers can for example be obtained by reacting a diol with an excess of isocyanate.

According to the inventive method the thioether-containing polyurethane is obtained by reacting at least one vinylether-functionalized polyurethane with at least one thiol compound wherein the at least one vinylether-functionalized polyurethane and the at least one thiol compound are comprised in a reaction mixture (B). The thiol compound is preferably present in the reaction (B) in an amount of 0.1 to 30 wt.-%, preferably 1 to 10 wt.-%, based on the total weight of the solvent-free reaction mixture (B).

The thiol compound is preferably chosen from the group consisting of monothiols and polythiols. In a preferred embodiment, the thiol compound is a low molecular weight thiol compound, having a molecular weight of 60 to 2200 g/mol. It was surprisingly found that thermally sensitive thiol compounds may also be employed in the inventive method. In an especially preferred embodiment, the thiol compound is therefore a thermally sensitive biomolecule, in particular cysteine or a protein carrying a cysteine residue.

In alternatively preferred embodiment, the at least one thiol compound is a polythiol compound, preferably having at least 2 SH-groups per molecule. In an especially preferred embodiment, the thiol compound comprises 2 to 6, preferably 2 to 4, SH-groups per molecule.

The reaction mixture (B) from which the thioether-containing polyurethane is obtained comprises at least one vinylether-functionalized polyurethane. It was surprisingly found that the best results with regard to yield and smoothness of the reaction was observed when the reaction mixture (B) contained an excess of the at least one vinylether-functionalized polyurethane. Preferably, the at least one vinylether-functionalized polyurethane is comprised in the reaction (B) in an amount of 70 to 99.9 wt.-%, preferably 90 to 99 wt.-%, based on the total weight of the solvent-free reaction mixture (B).

It was surprisingly found that the method according to the invention can be carried not only in organic solvents but also in water, allowing the employment of sensitive compounds, in particular thermally sensitive biomolecules such as proteins and peptides. In a preferred embodiment, the inventive method is therefore carried out in an aqueous environment. Preferably, the reaction between the at least one vinylether-functionalized polyurethane and the at least one thiol compound is carried out in an aqueous environment, in particular in an aqueous solution or an aqueous dispersion.

Depending on the application of the thioether-containing polyurethane obtained by the inventive method, it may be desirable that the obtained polyurethane is present in a cured form. In a preferred embodiment, the inventive method therefore further comprises a step of curing the reaction mixture (B). The curing is preferably initiated in the presence of a radical initiator. In an alternatively preferred embodiment, the curing is initiated by exposure of the reaction mixture (B) to heat and/or irradiation, such as UV irradiation, electron beam or visible light.

The inventive method is especially suitable for the production of thioether-containing polyurethane which comprise thermally sensitive units, such as biomolecules. In a preferred embodiment, curing of the reaction mixture (B) is therefore carried out at low temperatures, especially 0 to 100 °C, preferably 10 to 50 °C. In an especially preferred embodiment, curing is carried at room temperature (23 °C +/- 2°C).

A further object of the present invention is a thioether-containing polyurethane obtained by the inventive method. In a preferred embodiment, the inventive thioether-containing polyurethane comprises bioactive moieties such as protein and/or peptide moieties.

The method according to the invention provides a broad variety of thioether-containing polyurethanes which may be employed in a number of applications. However, it was surprisingly found that the thioether-containing polyurethanes obtained by the inventive method are especially suitable in adhesive and coating applications. A further object of the present invention is therefore the use of a thioether-containing polyurethane obtained by the method according to the invention in adhesive composition or coating compositions. In an especially preferred embodiment, the polyurethane is used in a 2K or 1K adhesive system.

The present invention will be described in more detail by the following examples which are by no means to be understood as limiting the scope of the invention.

### Examples:

### 1. Preparation of vinyletherpolyol with at least one tertiary amine group (ADVE)

Isopropylglycidylether (139 g, 1.2 mol) and 3-amino-1-propylvinylether (51 g, 0.50 mol) were placed in a round bottom reaction flask equipped with a condenser. After adding 5 drops of trimethylamine as a catalyst, the mixture was stirred at 120 °C for 1 h. The reaction mixture was cooled to 100 °C to add 20 mL of NaOH aqueous solution (1 mol/L) and additionally stirred for 30 min at the same temperature. The mixture was washed with 200 mL water 5 times and then the organic layer was evaporated to give brown oil 113 g (68% yield).

### 2. Preparation of vinylether-functionalized polyurethane

A mixture of diols was placed in a 500 mL round bottle reaction flask equipped with a condenser and dried at 90 °C for 2 h in vacuo. Hexanediol and ADVE were added at 70 °C and subsequently diisocyanate HDI was added. Exothermic reaction was observed after adding tin-free catalyst based on bismuth-neodecanoate (CAT) as a catalyst, indicating that the polyaddition reaction took place. After reaching theoretical NCO content (1.7%), the reaction mixture was cooled down to room temperature to obtain a prepolymer.

The above prepared prepolymer was dissolved in acetone (100 mL) to give a solution. The prepolymer solution was poured into water (400 mL) with vigorous agitation to obtain an aqueous dispersion. After chain extension by piperazine·6H₂O (3.1 g) and removal of acetone, an aqueous dispersion of vinylether-functionalized polyurethane (VEPU 1) was obtained.

A mixture of diols was placed in a 500 mL round bottle reaction flask equipped with a condenser and dried at 90 °C for 2 h in vacuo. After adding hexanediol, ADVE, and HDI, the polyaddition was carried out at 80 °C in the presence of a tin-free catalyst based on bismuth-neodecanoate (CAT) to reach theoretical NCO content (1.7%) in 15 min. Butanol was added to the reaction mixture to endcap terminal NCO groups. A solvent based vinylether-functionalized polyurethane (VEPU 2) was obtained by dissolving in acetone to be 50% solid content.

### 3. Acceleration of polyaddition

As described above, it was surprisingly found the at least one vinyletherpolyol with at least one tertiary amine group was found to accelerate the reaction, as demonstrated below:
As comparison, non-reactive polyurethanes having no vinyletherpolyol with at least one tertiary amine group (NRPU) was synthesized by following the procedure above described in the presence and absence of CAT 1. Reaction time to reach theoretical NCO content is summarized in Table 1.

**Table 1:**

| | With CAT | | Without CAT | |
|---|---|---|---|---|
| | VEPU¹⁾ | NRPU²⁾ | VEPU¹⁾ | NRPU²⁾ |
| Reaction time (min) | 15 | 40 | 270 | 390 |

| | | | | |
|---|---|---|---|---|
| ¹⁾ According to the invention ²⁾ comparison | | | | |

As listed in Table 1, the presence of the vinyletherpolyol with a tertiary amine group surprisingly accelerated the polyaddition to form polyurethane both in the presence and absence of a catalyst.

### 4. Post-modification of vinylether-functionalized polyurethane in aqueous dispersion

To an aqueous dispersion VEPU1 (20 g) were added thiol compound 6-mercapto-1-hexanol (0.2 g), ammonium persufate (APS) (0.05 g), and tetramethylethylenediamine (TMEDA, 0.026 g). The mixture was stirred at 40 °C for 24 h. After dialysis against water by using a membrane (MWCO = 100 kDa), a small portion of the dispersion was dried and then analyzed by ¹H NMR spectroscopy. The conversion of the double bond was evaluated by using integration of aromatic protons as an internal standard.

The vinylether double bond in VEPU1 was quantitatively consumed by thiol compounds 6-mercapto-1-hexanol and cysteine in the presence of redox radical initiator APS/TMEDA. In the contrast, no conversion was observed in the absence of thiol compounds. These results clearly demonstrate that VEPU1 is quantitatively grafted by the thiol compounds to the polymer backbone under mild conditions. The results are summarized in Table 2.

**Table 2:**

| Thiol compound | Conditions | Conversion of double bond (%) |
|---|---|---|
| 6-mecapto-1-hexanol | APS/TMEDA at 40°C | 100 |
| | APS/TMEDA at rt | 61 |
| | At 40 °C | 57 |
| cysteine | APS/TMEDA at 40°C | 100 |
| | APS/TMEDA at rt | 100 |
| | At 40 °C | 62 |
| none | APS/TMEDA at 40°C | 0 |
| | at 40°C | 0 |

### 5. Fabrication of casein-polyurethane hybrid material

The post-modification of VEPU by thiol-ene reaction is also applicable to fabricate hybrid materials with thermally sensitive biomolecules such as peptides and proteins. As an example, casein from bovine milk (SIGMA-ALDRICH) is employed as received. Among casein types α-s1- (12-15 g/L in milk), α-s2- (3-4 g/L in milk), β- (9-11 g/L in milk), and κ-casein (2-4 g/L in milk), κ-casein has two cysteine residues carrying thiol to be thiol-ene reactive. A typical procedure is as following.

Casein was dissolved in 50 mM Na₂CO₃ aqueous solution to be 50 mg/mL. To an aqueous dispersion VEPUD4 (1.0 g) were added the casein solution (9.3 mL), APS aqueous solution (0.2 g/L, 70 µL), and TMEDA aqueous solution (0.2 g/L, 72 µL). The mixture was stirred at 40 °C for 48 h and dialyzed against water by using a membrane (MWCO = 100 kDa) to remove unreacted casein. A small portion of the dialyzed dispersion was dried and then analyzed by IR spectroscopy to detect new absorbance bands at 1652 cm⁻¹ (amide I) and 1540 cm⁻¹ (amide II) along with 1731 cm⁻¹ (C=O, urethane). The present results demonstrate fabrication of casein-polyurethane hybrid material.

### 6. 2K adhesive system

A solvent based VEPU2 (2.0 g, 50wt% in acetone) was mixed with radical initiator *t*-butyl hydroperoxide (0.020 g) in the presence and absence of pentaerythritoltetra(3-mercaptopropionate) as thiol compound (active H equivalent 125 - 128 g/mol, 0.030 g). The mixtures were kept at room temperature in the air. In the presence of the thiol compound, the mixture became more viscous in the course of reaction to exhibit no tack within 17 h. Contrarily, no change was observed in the absence of a thiol compound after 17 h, and subsequent addition of a thiol compound cured the mixture under the identical conditions. These results demonstrate that VEPU2 can store with a radical initiator and start crosslinking to be cured upon mixing with a thiol-hardener in the air.

### 7. 1K adhesive system

A solvent based VEPU2 (2.0 g, 50wt.-% in acetone) was mixed with pentaerythritoltetra(3-mercaptopropionate) as thiol compound to be stoichiometry of SH/ene = 0.95. After addition of photo-radical initiator Irgacure 2959 (0 or 0.030 g), the mixture was immediately placed onto a quartz stage of a rheometer. UV irradiation (0.40 mW/cm² UVA-C) was started after 3 min and the viscoelastic properties were monitored to follow the curing reaction. In the presence Irgacure 2959, rapid increase in the complex viscosity η* was observed to reach a plateau in ca. 1 min upon UV irradiation. On the other hand, little raise in the complex viscosity η* was detected in the absence of the initiator under the identical conditions.

## Claims

1. Method for the production of thioether-containing polyurethanes obtained from a reaction mixture (B) comprising at least one vinylether-functionalized polyurethane and at least one thiol compound,
**characterized in that** the at least one vinylether-functionalized polyurethane is obtained from a reaction mixture (A) comprising at least one non-reactive polyol, at least one NCO-terminated compound and a vinyletherpolyol with at least one tertiary amine group.

2. Method according to claim 1, **characterized in that** the reaction mixture (A) from which the at least one vinylether-functionalized polyurethane is obtained comprises the vinyletherpolyol with at least one tertiary amine group in an amount of 0.1 to 30 wt.-%, preferably 1 to 10 wt.-%, based on the total weight of the solvent-free reaction mixture (A).

3. Method according to any of the forgoing claims, **characterized in that** the reaction mixture (A) comprises the at least one non-reactive polyol in an amount of 30 to 80 wt.-%, preferably 50 to 70 wt.-%, based on the total weight of the solvent-free reaction mixture (A).

4. Method according to any of the forgoing claims, **characterized in that** the at least one non-reactive polyol has an average hydroxyl number from 10 to 60 mg KOH/g, preferably 16 to 50 mg KOH/g.

5. Method according to any of the forgoing claims, **characterized in that** the reaction mixture (A) comprises the at least one NCO-terminated compound in an amount of 5 to 30 wt.-%, preferably 10 to 25 wt.-%, based on the total weight of the solvent-free reaction mixture (A).

6. Method according to any of the forgoing claims, **characterized in that** the at least one thiol compound is present in the reaction mixture (B) in an amount of 0.1 to 30 wt.-%, preferably 1 to 10 wt.-%, based on the total weight of the solvent-free reaction mixture (B).

7. Method according to any of the forgoing claims, **characterized in that** the reaction mixture (B) comprises the at least one vinylether-functionalized polyurethane in an amount of 70 to 99.9 wt.-%, preferably 90 to 99 wt.-%, based in the total weight of the solvent-free reaction mixture (B).

8. Method according to any of the forgoing claims, **characterized in that** the reaction of the vinylether-functionalized polyurethane and the at least one thiol compound is carried out in an aqueous environment.

9. Method according to any of the forgoing claims, further comprising the step of curing the obtained thioether-containing polyurethane, curing preferably being initiated by radical reaction, thermal curing or by exposure to irradiation.

10. Method according to claim 9, **characterized in that** curing is carried at ambient temperature.

11. Thioether-containing polyurethane obtained by the method of any of claims 1 to 10.

12. Use of a thioether-containing polyurethane obtained by the method according to any of claims 1 to 10 or a thioether-containing polyurethane according to claim 11 in adhesive compositions or coating compositions.

13. Use according to claim 12, **characterized in that** the adhesive composition is a 1K or a 2K system.
